Europäisches Patentamt

European Patent Office

Office européen des brevets

(19)

(11) Veröffentlichungsnummer: **0 159 557**
A2

(12) **EUROPÄISCHE PATENTANMELDUNG**

(21) Anmeldenummer: 85103584.0

(22) Anmeldetag: 26.03.85

(51) Int. Cl.⁴: **H 02 H 9/04**

(30) Priorität: 03.04.84 AT 1121/84

(43) Veröffentlichungstag der Anmeldung: 30.10.85 Patentblatt 85/44

(84) Benannte Vertragsstaaten: **CH DE FR GB IT LI**

(71) Anmelder: BROWN, BOVERI & CIE Aktiengesellschaft, Kallstadter Strasse 1, D-6800 Mannheim 31 (DE)

(72) Erfinder: Biegelmeier, Gottfried, Prof.Ing.Dr.Phil., Heiligenstädterstrasse 187, A-1190 Wien (AT)

(74) Vertreter: Kempe, Wolfgang, Dr. et al, c/o Brown, Boveri & Cie AG Postfach 351, D-6800 Mannheim 1 (DE)

(54) Überspannungsableiter mit Trennvorrichtung und Blinkanzeige.

(57) Ein Überspannungsableiter (2) mit einer Trennvorrichtung (4), deren Einzelteile in einem gemeinsamen Gehäuse untergebracht sind, besitzt eine Anzeigevorrichtung in Form einer Blinkschaltung (5). Deren Blinkfrequenzen zeigen an, ob sich die Einzelteile in funktionsfähigem Zustand befinden.

EP 0 159 557 A2

BROWN, BOVERI & CIE          AKTIENGESELLSCHAFT

Mannheim          21. März 1985

Mp.-Nr. 529/85          ZPT/P 4-Ft/Se

Überspannungsableiter mit Trennvorrichtung und Blinkanzeige

Die Erfindung betrifft einen Überspannungsableiter mit Trennvorrichtung, bestehend aus einer Gasentladungsstrecke in Serie mit einem spannungsabhängigen Widerstand, oder nur einem spannungsabhängigen Widerstand, wobei die Trennvorrichtung entweder aus Teilen besteht, die durch einen Schmelzstreifen, Schmelzdraht oder ein Schmelzlot miteinander verbunden sind, oder als schaltbare Trennvorrichtung mit Betätigungsorgan, Schaltschloß, Kontaktapparat und einem Überstromauslöser ausgeführt ist und alle Bauteile in einem gemeinsamen Gehäuse aus Isolierstoff angeordnet sind, das auch die Anschlußklemmen für den aktiven Leiter und die Erdungsleitung trägt.

Derartige Überspannungsableiter sind bekannt (siehe Österreichische Patentanmeldung A 4260/80). Die Meldung des Ansprechens der Trennvorrichtung erfolgt meist durch optische Anzeige mittels eines Kennmelders, der nach dem Ansprechen der Trennvorrichtung einige Millimeter aus dem Gehäuse hervorragt. Manchmal ist auch ein Hilfskontakt vorgesehen, über den optisch oder akustisch eine Meldung ausgelöst wird.

Die Trennvorrichtung ist bei den meisten Konstruktionen so ausgebildet, daß der Überspannungsableiter nach dem Ansprechen der Trennvorrichtung nicht mehr verwendet werden kann und ausgewechselt werden muß. Naturgemäß könnten für die Trennvor-

0159557

richtung auch auswechselbare Schmelzeinsätze oder leitungsschutzschalterähnliche Konstruktionen verwendet werden. (Britische Patentanmeldung GB 2 010 613, sowie DE-PS 975 252 und FR-PS 812 674).

Der Nachteil aller bisher bekannten Lösungen liegt darin, daß das Ansprechen der Trennvorrichtung und die Funktionsfähigkeit des spannungsabhängigen Widerstandes nach der Stoßstrombeanspruchung, die zum Ansprechen der Trennvorrichtung geführt hat, nicht genügend angezeigt wird.

Es kann sich ja entweder darum handeln, daß nur die Trennvorrichtung angesprochen hat und die Gasentladungsstrecke und/oder der spannungsabhängige Widerstand noch funktionsfähig sind, oder alle Bauteile des Ableiters sind mehr oder weniger beschädigt. Eine Anzeigevorrichtung sollte daher einerseits melden, daß die Trennvorrichtung angesprochen hat, und zwar deutlicher als es zum Beispiel ein herausragender Kennmelder vermag, und andererseits auch den Betriebszustand der Gasentladungsstrecke und/oder des spannungsabhängigen Widerstandes erkennen lassen.

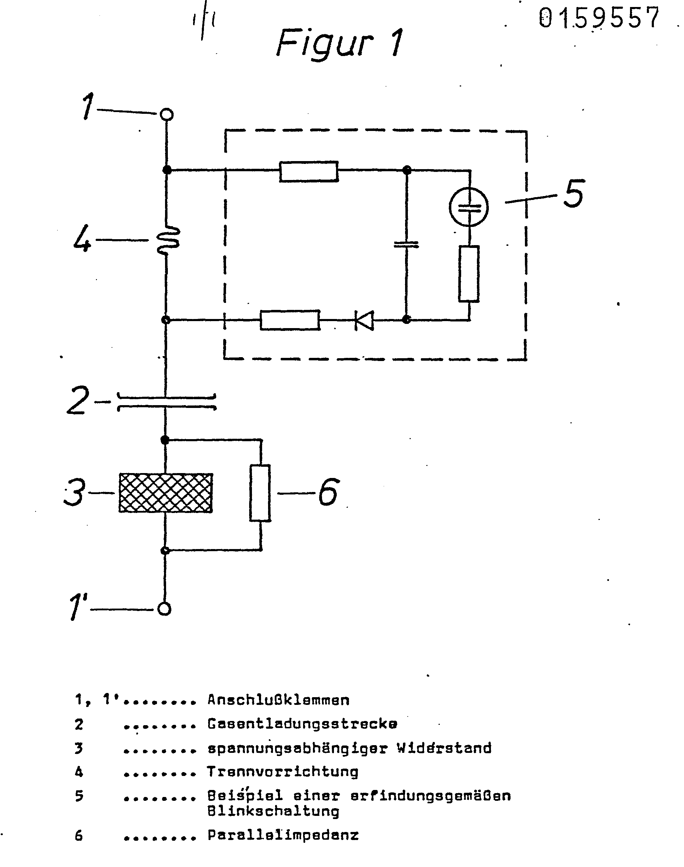

Zu diesem Zweck wird erfindungsgemäß eine Blinkschaltung parallel zur Trennvorrichtung vorgeschlagen. In Serie mit der Trennvorrichtung liegt ja der spannungsabhängige Widerstand, der im einwandfreien Zustand bei Netzspannung sehr hochohmig ist (Figur 1). Bei geschlossener Trennvorrichtung ist der Schaltkreis mit der Blinkschaltung spannungslos und es erfolgt keine Anzeige.

Spricht die Trennvorrichtung an und ist der spannungsabhängige Widerstand nach der Stoßstrombeanspruchung noch funktionsfähig, also hochohmig, dann blinkt die Glimmlampe relativ langsam, etwa alle 3 bis 5 Sekunden. Die Trennvorrichtung kann dann wieder geschlossen werden, etwa durch Einsetzen eines neuen Schmelzeinsatzes, oder bei schaltbaren Trennvorrichtungen durch Betätigen des Knebels.

Ist die Gasentladungsstrecke und/oder der spannungsabhängige Widerstand jedoch beschädigt, dann blinkt die Lampe mit hoher Frequenz, etwa im halben Sekunden-Rhythmus, und zeigt an, daß der Ableiter ausgewechselt werden muß. Zum Einstellen der Blinkfrequenz kann erfindungsgemäß parallel zum spannungsabhängigen Widerstand eine hochohmige ohmsche, kapazitive oder induktive Impedanz verwendet werden.

Figur 1 zeigt beispielhaft die erfindungsgemäße Ausführung eines Überspannungsableiters mit Trennvorrichtung und Blinkanzeige. Die Anschlußklemme --1-- wird mit den aktiven Leitern der zu schützenden Anlage verbunden; die Anschlußklemme --1'-- mit der Potentialausgleichsschiene. Die Gasentladungsstrecke --2-- ist mit dem spannungsabhängigen Widerstand --3-- und der Trennvorrichtung --4-- in Serie geschaltet. Parallel zur Trennvorrichtung liegt die Blinkschaltung --5--. Mit der Parallelimpedanz --6-- kann die Blinkfrequenz eingestellt werden.

## Patentansprüche

1. Überspannungsableiter mit Trennvorrichtung, bestehend aus einer Gasentladungsstrecke (2), in Serie mit einem spannungsabhängigen Widerstand (3), oder nur einem spannungsabhängigen Widerstand (3), wobei die Trennvorrichtung (4) entweder aus Teilen besteht, die durch einen Schmelzstreifen, Schmelzdraht, oder ein Schmelzlot miteinander verbunden sind, oder als schaltbare Trennvorrichtung mit Betätigungsorgan, Schaltschloß, Kontaktapparat und einem Überstromauslöser ausgeführt ist und alle Bauteile in einem gemeinsamen Gehäuse aus Isolierstoff angeordnet sind, das auch die Anschlußklemmen für den aktiven Leiter und die Erdungsleitung trägt, dadurch gekennzeichnet, daß in dem gemeinsamen Gehäuse eine Anzeigevorrichtung in Form einer Blinkschaltung (5) vorhanden ist, deren Blinkfrequenzen anzeigen, ob die Trennvorrichtung angesprochen hat und ob die Gasentladungsstrecke und/oder der spannungsabhängige Widerstand noch in funktionsfähigem Zustand sind. (Fig.1)

2. Überspannungsableiter mit Trennvorrichtung nach Anspruch 1, dadurch gekennzeichnet, daß zum spannungsabhängigen Widerstand (3) eine hochohmige Impedanz (6) zur Einstellung der Blinkfrequenz parallel geschaltet ist. (Fig. 1)

Figur 1

0159557

1, 1' ......... Anschlußklemmen

2 ......... Gasentladungsstrecke

3 ......... spannungsabhängiger Widerstand

4 ......... Trennvorrichtung

5 ......... Beispiel einer erfindungsgemäßen Blinkschaltung

6 ......... Parallelimpedanz